# EUROPÄISCHE PATENTANMELDUNG

(11) **EP 1 228 955 A2**
(43) Veröffentlichungstag der Anmeldung: **07.08.2002**
(21) Anmeldenummer: 02002381.8
(22) Anmeldetag: 31.01.2002
(51) Int. Cl.: B62L 1/00, B60T 1/06, F16D 55/02, B62K 25/00

(54) **Bremssystem**

(30) Priorität: 31.01.2001 DE 10104256
(71) Anmelder: GUSTAV MAGENWIRTH GmbH & Co., D-72574 Bad Urach (DE)
(72) Erfinder: Ruopp, Michael, 89180 Berghülen (DE)
(74) Vertreter: Friese, Martin

(57) **Zusammenfassung**

Die Erfindung betrifft eine Bremssystem mit einer Nabe (10), die auf einer Steckachse zur lösbaren Befestigung an einem Rollstuhl, Kinderwagen, Anhänger oder Fahrzeug angeordnet ist, einer Scheibenbremse, die eine Bremsscheibe (40) umfasst, und einem Mitnehmer (20) zur drehfesten Aufnahme der Bremsscheibe (40), der mit der Nabe drehfest verbindbar ist. Der Erfindung liegt die Aufgabe zu Grunde, ein Bremsystem mit einer Scheibenbremse anzugeben, daß auch bei Systemen mit einer einseitig gelagerten Steckachse ohne Störgeräusche und sicher arbeitet. Dazu ist die Bremsscheibe (40) gegenüber der Nabe (10) in Axialrichtung verschiebbar angeordnet.

## Beschreibung

Die Erfindung betrifft ein Bremssystem gemäß dem Oberbegriff von Anspruch 1.

Die DE 195 32 057 A1 zeigt ein Bremssystem gemäß dem Oberbegriff von Anspruch 1. Bei dem dort offenbarten Bremssystem ist die Bremsscheibe mit Schrauben an der Nabe derart befestigt, daß die Bremscheibe gegen Drehung und axialer Verschiebung gegenüber der Nabe fest ist. Weiterhin ist das Laufrad mit der Bremscheibe auf einer Steckachse angeordnet, die an beiden Seiten gelagert ist. Wenn man das dort offenbarte Bremssystem auf ein Bremssystem mit einer einseitig gelagerten Steckachse übertragen will, ergibt sich das Problem, daß die Bremsscheibe durch das dann entstehende Kippspiel der Steckachse gegenüber dem Bremssattel in axialer Richtung verlagert wird, was mit störenden Geräuschen und schnellerem Belagverschleiß sowie einer unerwünschten Bremsleistung verbunden ist.

Der Erfindung liegt daher die Aufgabe zu Grunde, ein Bremsystem mit einer Scheibenbremse anzugeben, daß auch bei Systemen mit einer einseitig gelagerten Steckachse ohne Störgeräusche und sicher arbeitet.

Die Aufgabe der Erfindung wird mit einem Bremssystem gemäß den Merkmalen von Anspruch 1 gelöst. Vorteilhafte Ausgestaltungen der Erfindung sind in den abhängigen Ansprüchen angegeben.

Erfindungsgemäß ist die Bremsscheibe gegenüber der Nabe in Axialrichtung verschiebbar angeordnet. Dadurch kann die Bremsscheibe sich in Axialrichtung verlagern um das durch die einseitig gelagerte Steckachse bedingte Kippspiel auszugleichen.

Der Einsatz einseitig gelagerter Steckachsen hat den Vorteil, daß das Laufrad besonders einfach und schnell von dem Kinderwagen, Rollstuhl oder Fahrradanhänger entfernt und montiert werden kann. Daher sind derartige Steckachsen insbesondere von Behinderten leicht bedienbar. Einseitige Steckachsen haben in der Regel auch den Vorteil, daß sehr kleine Betätigungskräfte erforderlich sind.

Gemäß einer bevorzugten Ausführung ist die Bremsscheibe mit dem Mitnehmer über Bundschrauben drehfest verbunden, wobei die Bremsscheibe im Bundbereich der Bundschrauben axial verschiebbar angeordnet ist. Diese Ausführung hat den Vorteil, daß die axiale Verlagerbarkeit der Bremsscheibe gegenüber der Nabe auf elegante Weise einfach und sicher gewährleistet werden kann.

Bei dieser Ausführung können im Bereich des Bunds der Bundschrauben Buchsen, die vorzugsweise aus Kunststoff ausgebildet sind, vorgesehen sein, auf denen die Bremsscheibe aufgenommen ist, wobei vorzugsweise die Buchsen auf dem jeweiligen Bund der Bundschrauben axial verschiebbar angeordnet sind und/oder die Bremsscheibe auf den Buchsen axial verschiebbar angeordnet ist.

Bei dem Einsatz bei Fahrradanhängern für Kleinkinder ist es aus bauraumtechnischen Gründen erwünscht, die Bremsscheibe außerhalb des Rahmens anzuordnen. Wenn innerhalb des Rahmens genügend Bauraum zur Verfügung steht, wird bevorzugt, daß die Bremsscheibe innerhalb des Rahmens angeordnet ist und über eine Kupplung mit dem Laufrad drehfest verbindbar ist. Bei dieser Ausführung bleibt der Bremssattel und die Bremsscheibe beim Rahmen des Anhängers, wenn das Laufrad demontiert wird.

Bremssysteme mit einseitigen Steckachsen sind auch aus dem Rollstuhlbereich bekannt. Die Nabe enthält bei dem aus diesem Bereich bekannten Bremssystem eine Trommelbremse. An der Nabe sind auf bekannte Weise Speichen befestigt, die eine Felge mit einem Luftreifen konzentrisch zu der Nabe anordnen. Das Rad und die Nabe sind einschließlich der Trommelbremse mit einer Steckachse in einer Aufnahme für die Steckachse befestigbar. An der Aufnahme sind Bremsbacken angeordnet, die bei der Betätigung der Bremse gegen die in die Nabe integrierte Bremstrommel drücken und ein Reibmoment zum Abbremsen des Rades bewirken.

Bei den bekannten Bremssystemen werden keine Scheibenbremsen verwendet, weil sich der Einbau einer Bremsscheibe mit einer Steckachse problematisch gestaltet. Bei den aus dem Fahrradbereich bekannten Scheibenbremsen ist die Scheibe drehfest mit der Nabe verbunden und muß beim Einbau des Rades von unten zwischen die Bremsbeläge des Bremssattels der Scheibenbremse eingeführt werden. Anschließend muß bei der Montage eines Rads die Steckachse senkrecht zu der Einführrichtung der Bremsscheibe in eine Aufnahme für die Steckachse eingeführt werden. Dadurch ergibt sich eine umständliche Montage.

Der Erfindung liegt daher auch die Aufgabe zugrunde, ein Bremssystem anzugeben, das eine Scheibenbremse in Kombination mit einer Steckachse aufweist und leicht zu montieren ist.

Diese Aufgabe der Erfindung wird mit einem Bremssystem gemäß dem Merkmalen von Anspruch 4 gelöst. Vorteilhafte Ausgestaltungen der Erfindung sind in den abhängigen Ansprüchen angegeben.

Erfindungsgemäß ist der Mitnehmer und damit auch die Bremsscheibe mit der Nabe über eine Kupplung drehfest verbunden. Dadurch ergibt sich die Möglichkeit, die Bremsscheibe bei der Demontage des Rades von der Nabe zu trennen und das Rad ohne die Bremsscheibe von dem Rahmen des Fahrzeugs, Wagens oder Anhängers zu entfernen. Infolgedessen muß die Bremsscheibe bei der Montage des Rades nicht mehr in den Bremssattel eingeführt werden und mit dem Rad bei der Einführung der Steckachse in dieser Stellung gehalten werden, wodurch sich die Montage wesentlich erleichtert.

Die Erfindung hat den weiteren Vorteil, daß die Bremsscheibe nicht mehr durch das bei einer Steckachse vorhandene Spiel beeinflußt wird. Durch dieses Spiel würde die Bremsscheibe häufig an den in dem Bremssattel aufgenommenen Belägen streifen. Bei Anwendungen im höheren Geschwindigkeitsbereich (Rennrollstühle bzw. Fahrradanhänger) käme hinzu, daß die Laufräder bei Scheibenbremsen mit fest an der Nabe montierten Scheiben durch das Spiel der Steckachse zum Schwingen neigen, was zu extrem kritischen Fahrzuständen führen könnte.

Durch den erfindungsgemäßen Aufbau kann das Steckachsensystem von dem eigentlichen Bremssystem entkoppelt werden. Das hat den Vorteil, daß ein einfacher und kostengünstiger Aufbau des Bremssystems verwirklicht werden kann.

Im Gegensatz zu Trommelbremsen entfällt bei dem erfindungsgemäßen Bremssystem mit einer Scheibenbremsen die Notwendigkeit einer Einstellung der Bremse nach der Montage.

Das erfindungsgemäße Bremssystem kann vorteilhafterweise an zwei parallel zueinander angeordneten Rädern, beispielsweise bei einem Kinderwagen, einem Fahrradanhänger oder einem Rollstuhl, eingesetzt werden. Infolge des Einsatzes einer hydraulischen Betätigung kann eine nahezu identische Bremskraft bei den beiden Bremssystemen ausgeübt werden. Dadurch ergibt sich ein sehr guter Geradeauslauf beim Bremsen. Vorteilhafterweise erfolgt dabei die Betätigung der beiden Bremssysteme über einen Hebel. Das ist bei den bekannten Bremssystemen mit mechanisch betätigten Trommelbremsen wegen der hohen auftretenden Reibung der Bowdenzüge praktisch nicht realisierbar.

Durch die Entkopplung des Steckachsensystems von dem eigentlichen Bremssystem kann das Bremssystem so ausgebildet werden, daß beim Fahren auftretende Schleifgeräusche möglichst vermieden werden.

Durch die Verwendung einer Scheibenbremse ergibt sich erfindungsgemäß eine im Vergleich zu den bekannten Trommelbremsen bessere Bremswirkung. Insbesondere ist die Bremsleistung sehr gut dosierbar.

Gemäß einer Ausführung der Erfindung wird die Kupplung durch einen Mitnehmer gebildet, der die Bremsscheibe einerseits drehfest aufnimmt und andererseits Kupplungsteile aufweist, die in entsprechende Kupplungsteile der Nabe eingreifen. Vorzugsweise sind die Kupplungsteile als Klauenkupplung mit ineinander greifenden Klauen ausgebildet, die einerseits an der Nabe und andererseits an dem Mitnehmer ausgebildet sind. Andere dem Fachmann bekannte Kupplungen können auch erfindungsgemäß eingesetzt werden, um eine drehfeste aber lösbare Verbindung zwischen der Nabe und der Bremsscheibe zu schaffen.

Gemäß einer Ausführung der Erfindung ist der Mitnehmer in einer Aufnahme drehbar gelagert, vorzugsweise über eine Wälzlagerung, die insbesondere als einreihiges Wälzkugellager ausgebildet ist. Andere dem Fachmann bekannte Lagerungen, beispielsweise Gleitlager, oder andere Wälzlager, wie zweireihige Kugellager usw., können auch verwendet werden.

Der Mitnehmer weist einen Scheibenaufnahmeteil auf, der vorzugsweise als Vierkant ausgebildet ist, der in eine entsprechende Öffnung der Bremsscheibe zur drehfesten Aufnahme der Bremsscheibe eingreift. Dem Fachmann bekannte alternative drehfeste Aufnahmen, beispielsweise ein Fünfkant, ein Sechskant, eine Keilwelle oder eine andere Wellen-Nabenverbindung sind denkbar.

Gemäß einer bevorzugten Ausführung der Erfindung ist die Bremsscheibe innerhalb des Rahmens des Fahrzeugs, Anhängers oder Wagens angeordnet. Infolgedessen ist die Scheibe insbesondere bei abgenommenen Laufrädern gegenüber Stößen geschützt. Es ist jedoch klar, daß die Bremsscheibe auch außerhalb des Rahmens angeordnet werden kann. In diesem Fall könnten die Kupplungsteile direkt an der Bremsscheibe angebracht werden.

Gemäß einer vorteilhaften Ausführung ist das Bremssystem als vollständiges System ausgebildet, das als vormontierte Einheit verkauft werden kann. Die vormontierte Einheit kann einfach durch zwei Schrauben in Bohrungen an einem Rahmen montiert werden. Das hat den Vorteil, daß das Bremssystem leicht in vorhandene Rollstühle oder andere Fahrzeuge, Anhänger oder Wagen mit Steckachsensystemen integrierbar ist. Außerdem ist das Bremssystem leicht montierbar und ferner auf einfache Weise höhenverstellbar.

Gemäß einer vorteilhaften Ausführung der Erfindung sind die Lagerung des Mitnehmers und der Bremssattel in einem Bauteil integriert. Dadurch ergibt sich ein besonders einfacher und kostengünstiger Aufbau. Insbesondere kann man gegebenenfalls auf eine Lagerung in der Nabe verzichten. Gemäß einer Weiterbildung der Erfindung kann die Steckachse auch in der Nabe integriert sein, um einen noch einfacheren Aufbau zu erreichen.

Gemäß einer Ausführung der Erfindung weist das System zwei Bremskolben in dem Bremssattel auf, die auf der gleichen Seite angeordnet sind und bewegliche Beläge gegen Festbeläge gleichzeitig drücken. Dadurch ergibt sich eine höhere Bremsleistung.

Die Erfindung kann mit bekannten Bremssätteln einer Scheibenbremse ausgebildet werden. Besonders vorteilhaft ist die Verwendung eines Bremssattels, der in der deutschen Anmeldung 100 12 358.9 der vorliegenden Anmelderin offenbart ist, deren gesamte Offenbarung in die vorliegenden Anmeldung durch Bezugnahme aufgenommen ist. Vorteilhafterweise ist der dort offenbarte Bremssattel derart ausgebildet, daß er zwei Kolben mit zwei Bremsbelagpaaren aufweist.

Die Erfindung wird im folgenden anhand der in den Figuren gezeigten Ausführung beispielhaft beschrieben:
- Fig. 1: zeigt eine perspektivische Ansicht eines Scheibenbremssystems gemäß der Erfindung, das an einem teilweise dargestellten Rahmenteil befestigt ist.
- Fig. 2: zeigt einen Schnitt entlang der Linie II-II von Fig. 5 durch das Bremssystem von Fig. 1.
- Fig. 3: zeigt eine Ansicht des in Fig. 1 dargestellten Bremssystems von oben.
- Fig. 4: zeigt eine Vorderansicht des in Fig. 1 gezeigten Bremssystems.
- Fig. 5: zeigt eine Seitenansicht des in Fig. 1 dargestellten Bremssystems.
- Fig. 6: zeigt eine perspektivische Darstellung des Mitnehmers des Bremssystems von Fig. 1.
- Fig. 7: zeigt eine perspektivische Darstellung der Nabe des Bremssystems von Fig. 1.
- Fig. 8: zeigt eine Aufsicht der Bremsscheibe, des Mitnehmers und der Aufnahme eines weiteren erfindungsgemäßen Bremssystems.
- Fig. 9: zeigt eine Ansicht der in Fig. 8 gezeigten Teile des weiteren erfindungsgemäßen Bremssystems von Fig. 8 in Richtung der Steckachse.
- Fig. 10: zeigt eine Seitenansicht der in Fig. 8 gezeigten Teile des weiteren erfindungsgemäßen Bremssystems von Fig. 8 in Laufrichtung des Rades.
- Fig. 11: zeigt eine perspektivische Darstellung der in Fig. 8 gezeigten Teile des weiteren erfindungsgemäßen Bremssystems von Fig. 8.

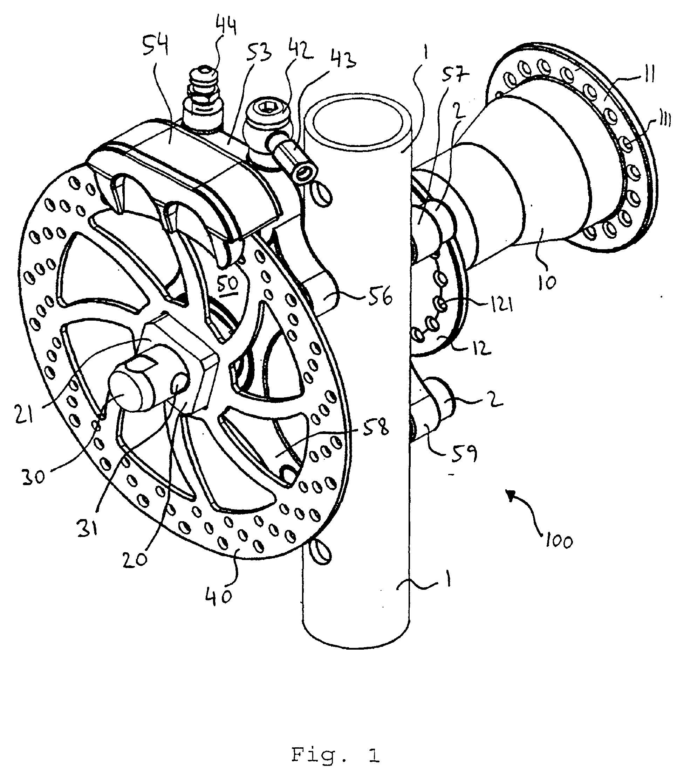

Das in Fig. 1 dargestellte Bremssystem 100 ist an einem Rahmen 1 mit zwei Schrauben 2 befestigt. Als Schrauben können beispielsweise Schrauben M6 verwendet werden. Das Bremssystem 100 weist eine Nabe 10 auf, an deren Seiten jeweils ein Flansch 11 bzw. 12 angebracht ist. In den Flanschen 11 und 12 sind Öffnungen 111 bzw. 121 vorgesehen, in denen Speichen eines Rads auf bekannte Weise montiert werden können, um beispielsweise eine Felge mit einem Luftreifen konzentrisch zu der Nabe anzuordnen. Die Nabe 10 ist über einen Mitnehmer 20 mit einer Bremsscheibe 40 verbunden. Durch den Mitnehmer 20 und die Nabe 10 verläuft eine Steckachse 30, die auf bekannte Weise durch eine entriegelbare Kugel 31 gesichert wird. Steckachsen mit einer Kugelsicherung sind beispielsweise bei Rollstühlen bekannt.

Gemäß einer nicht dargestellten Ausführung der Erfindung kann die Steckachse auch kürzer ausgebildet sein. Beispielsweise kann die Steckachse mit dem Mitnehmer abschließen. In diesem Fall muß der Mitnehmer in der Bohrung eine Aussparung aufweisen, in die die Kugel zur Sicherung der Steckachse in dem Mitnehmer ausrücken kann.

Gemäß einer weiteren nicht dargestellten Ausführung der Erfindung kann die Steckachse auch mit der Nabe fest verbunden und gegebenenfalls mit der Nabe einstückig ausgebildet sein.

Das Bremssystem 100 weist eine Aufnahme 50 auf, in der der Mitnehmer 20 drehbar gelagert ist. Die Aufnahme 50 hat Vorsprünge 56, 57, 58 und 59, die den Rahmen 1 umfassen und Bohrungen für Schrauben 2 zur Befestigung der Aufnahme 50 an dem Rahmen 1 enthalten. Die Aufnahme 50 ist mit Schrauben 2 an dem Rahmen befestigt. Andere bekannte Verbindungstechniken zur Befestigung der Aufnahme 50 an dem Rahmenteil 1, beispielsweise Nietverbindungen, sind denkbar.

Die Aufnahme 50 weist einen Bremssattel 53 mit einem Hydraulikanschluß 42, einer daran angeschlossenen Hydraulikleitung 43 und einer Entlüftungsschraube 44 auf. In dem Bremssattel 53 sind bei der dargestellten Ausführung zwei Bremsbelagpaare vorgesehen, die beim Bremsen ein Reibmoment auf die Bremsscheibe 40 ausüben. Der Bremssattel ist oben mit einem Deckel 54 verschlossen.

Der Aufbau und die Funktionsweise eines Bremssattels sind dem Fachmann bekannt. Der Bremssattel des in den Figuren gezeigten Ausführungsbeispiels entspricht dem Bremssattel der von der vorliegenden Anmelderin in der deutschen Anmeldung 100 12 358.9 offenbarten Scheibenbremse, deren gesamte Offenbarung hier durch Bezugnahme aufgenommen ist.

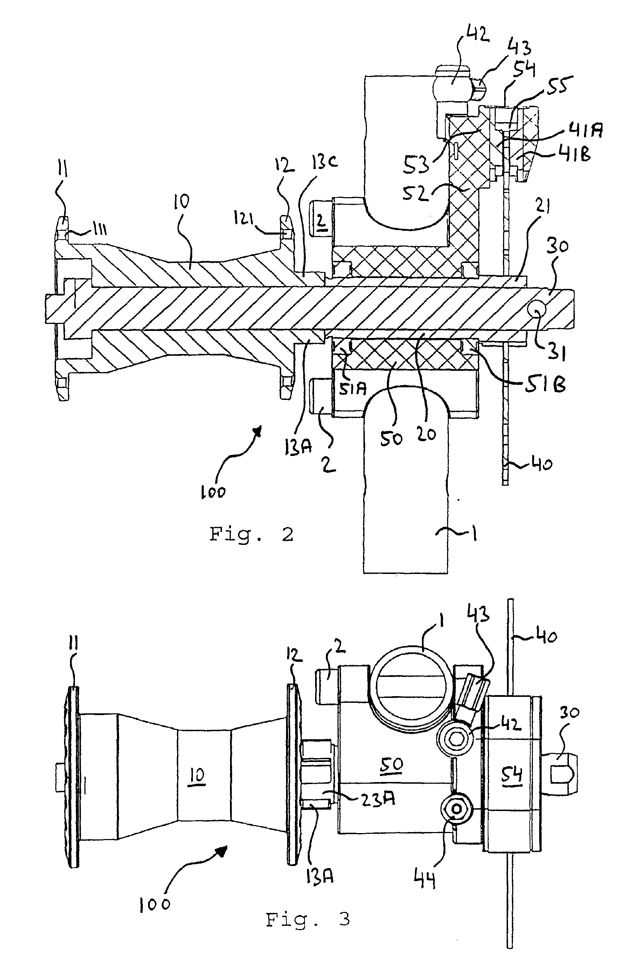

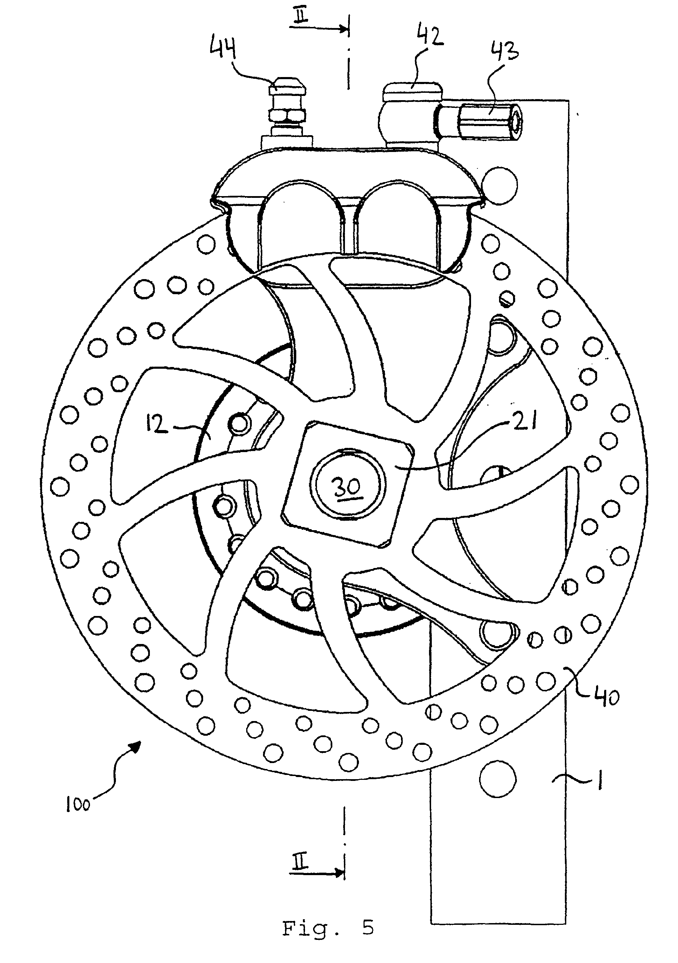

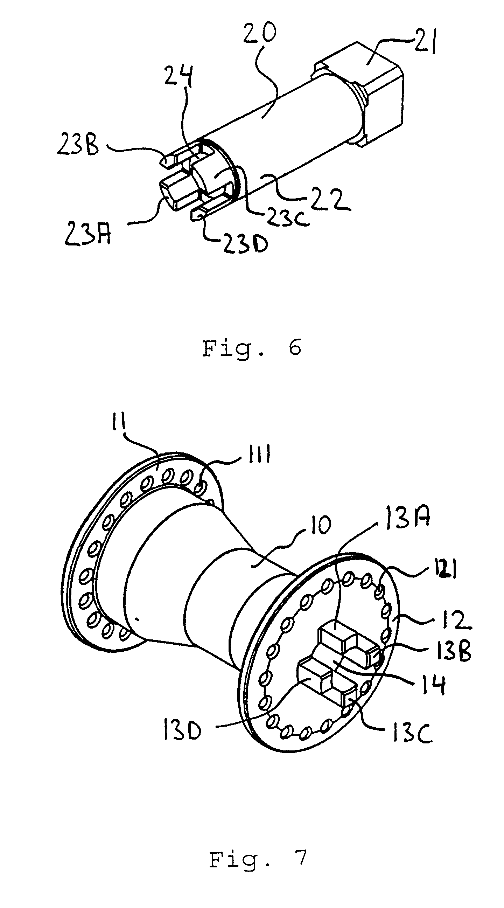

Fig. 2 zeigt einen Schnitt durch das in Fig. 1 dargestellte Bremssystem entlang der Linie II-II von Fig. 5. Bezüglich der in Fig. 1 gezeigten und jetzt im Zusammenhang mit Fig. 2 nicht beschriebenen Teile wird auf deren Beschreibung verwiesen. Die Nabe 10 ist mit dem Mitnehmer 20 über eine Klauenkupplung, die im Zusammenhang mit den Figuren 6 und 7 genauer beschrieben wird, drehfest verbunden. In Fig. 2 erkennt man die beiden Kupplungsteile 13A und 13C der Nabe 10. Der Mitnehmer 20 weist einen Scheibenaufnahmeteil 21 auf, auf dem die Bremsscheibe 40 drehfest aufgenommen ist. Da die Bremsscheibe 40 in Axialrichtung beweglich auf dem Scheibenaufnahmeteil 21 angeordnet ist, kann die Bremsscheibe 40 durch eine Verlagerung in Axialrichtung den zunehmenden Belagverschleiß ausgleichen. Außerdem kann das Spiel der Steckachse in Axialrichtung ausgeglichen werden, so daß störende Schleifgeräusche vermieden werden. Bei dem gezeigten Ausführungsbeispiel weist das Scheibenaufnahmeteil 21 einen Vierkant auf, der in einer entsprechenden Öffnung der Bremsscheibe 40 aufgenommen ist. Der Mitnehmer 20 ist drehbar in der Aufnahme 50 gelagert. In der Aufnahme 50 sind zwei Lager 51A, 51B angeordnet, die vorzugsweise als einreihige Kugellager ausgebildet sind.

Die Aufnahme 50 weist einen Flanschbereich 52 auf, an dessen Ende der Bremssattel 53 angeordnet ist. Der Bremssattel ist in bekannter Weise aufgebaut. Er enthält mindestens einen Zylinder, in dem ein Kolben durch die Wirkung einer Hydraulikflüssigkeit verschiebbar ist und auf einen beweglichen Bremsbelag wirkt. Der Bremssattel 53 bildet einen Scheibenraum 55 um die Bremsscheibe 40, in dem sich gegenüberliegende Bremsbeläge 41A, 41B angeordnet sind, die beim Bremsen auf die Bremsscheibe 40 ein Reibmoment ausüben.

Selbstverständlich können im Rahmen der Erfindung auch andere bekannte Bremssattelformen verwendet werden, beispielsweise ein Bremssattel mit zwei sich gegenüberliegenden Kolben bzw. ein mechanisch betätigbarer Bremssattel.

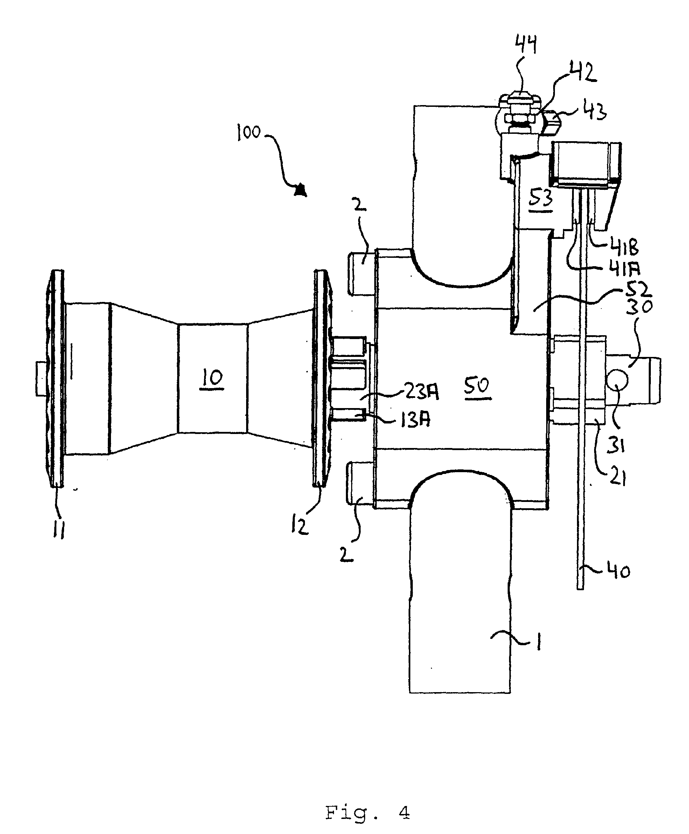

Fig. 3 zeigt eine Ansicht des Bremssystems 100 von oben, Fig. 4 zeigt eine Vorderansicht des Bremssystems 100 und Fig. 5 zeigt eine Seitenansicht des Bremssystems 100. Bezüglich der Beschreibung wird auf die vorangegangene Beschreibung verwiesen.

Fig. 6 zeigt eine perspektivische Ansicht des Mitnehmers 20 für das in den Figuren 1 bis 5 dargestellte Bremssystem. Der Mitnehmer 20 weist einen Scheibenaufnahmeteil 21 und einen Achsenaufnahmeteil 22 auf. Der Scheibenaufnahmeteil 21 ist bei dem dargestellten Ausführungsbeispiel als Vierkant ausgebildet. Durch den Mitnehmer 20 verläuft eine Bohrung 24, deren Innendurchmesser dem Außendurchmesser der Steckachse 30 entspricht. In der Bohrung 24 wird die Steckachse zur Montage des Bremssystems aufgenommen. An dem dem Scheibenaufnahmeteil 21 gegenüberliegenden Ende des Achsenaufnahmeteils sind Kupplungsteile 23A, 23B, 23C und 23D, beispielsweise Vorsprünge oder Klauen vorgesehen, die mit entsprechenden Kupplungsteilen der Nabe eine Klauenkupplung bilden. Gemäß nicht dargestellten Ausführungsbeispielen können auch andere Kupplungen verwendet werden, die eine drehfeste Verbindung zwischen der Nabe 10 und dem Mitnehmer 20 schaffen.

Fig. 7 zeigt eine perspektivische Ansicht der Nabe 10 des Bremssystems 100 der Figuren 1 bis 5, aus der die Ausbildung der Kupplungsteile für die Klauenkupplung besser hervorgeht. Die Nabe 10 weist an dem bremsscheibenseitigen Flansch 12 Vorsprünge bzw. Klauen 13A, 13B, 13C, 13D auf, die derart ausgebildet sind, daß sie drehschlüssig zwischen entsprechende Klauen 23A, 23B, 23C und 23D des Mitnehmers passen. Durch die Nabe 10 verläuft eine Bohrung 14, in die die Steckachse 30 paßt.

Zur Montage der Aufnahme 50 mit dem Mitnehmer 20 werden zunächst die Lager 51A und 51B in die Aufnahme 50 eingepreßt. Anschließend wird der Mitnehmer 20 von der Bremsscheibenseite in die Aufnahme 50 durch die Lager 51A und 51B gesteckt und auf der Nabenseite mit einem nicht dargestellten Sicherungsring axial gesichert.

Zur Montage des Rads mit der Nabe 10 wird die Steckachse 30 gegebenfalls in die Nabe 10 eingeführt. Die in der Nabe 10 angeordnete Steckachse 30 wird anschließend durch den Mitnehmer 20 gesteckt, bis die Kupplungsteile 13A, 13B, 13C und 13D der Nabe 10 mit den Kupplungsteilen 23A, 23B, 23C und 23D in Eingriff kommen und die Kugel 31 wieder aus dem Mitnehmer austritt. Durch die Federbelastung wird die Kugel nach außen gedrückt und sichert die Steckachse an dem Mitnehmer 20, d.h. daß die Steckachse selbständig über die Kugel einrastet.

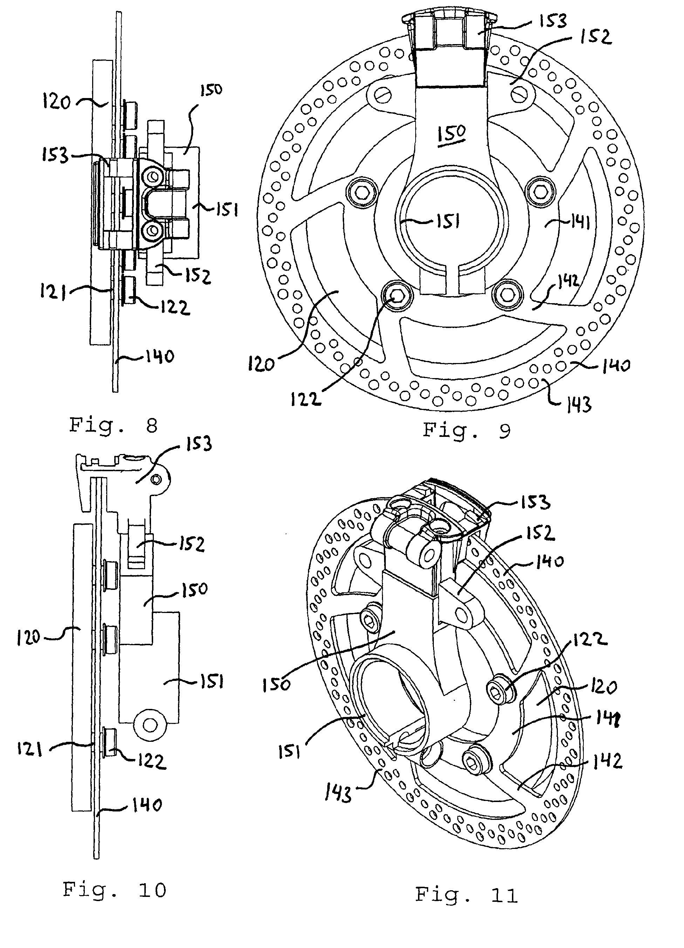

In den Figuren 8 bis 11 werden Teile eines weiteren erfindungsgemäßen Bremssystem gezeigt. Dabei zeigt Fig. 8 eine Aufsicht einer Bremsscheibe 150, eines Mitnehmers 120 und einer Aufnahme 150 mit einem Bremssattel 153, und Fig. 9 zeigt eine Ansicht der Teile 8 in Richtung der nicht dargestellten Achse, während Fig. 10 eine Seitenansicht und Fig. 11 eine perspektivische Ansicht der in Fig. 8 gezeigten Teile von Fig. 8 in Laufrichtung des Rades zeigt. Die nicht dargestellten Teile sind dem Fachmann bekannt bzw. entsprechen der in den Figuren 1 bis 7 gezeigten Ausführungsform und werden daher hier nicht beschrieben.

Die Bremsscheibe weist einen Innenbereich 141 und einen Außenbereich 143 auf, die mit fünf Stegen 142 miteinander verbunden sind. Der Innenbereich ist kreisringförmig ausgebildet und weist fünf Löcher auf, in denen jeweils eine Bundschraube 122 zur drehfesten Verbindung der Bremsscheibe 140 mit dem Mitnehmer 120 angeordnet sind. Die Bundschrauben 122 sind bis zum Anschlag des Bundes in Löcher des Mitnehmers 120 eingeschraubt, der auf bekannte Weise drehfest mit dem nicht dargestellten Laufrad beispielsweise über eine Kupplung verbindbar ist. Der Mitnehmer 120 bildet mit anderen Worten den Adapter für die Befestigung der Bremsscheibe 140 an dem Laufrad. Auf dem Bund der Bundschrauben 122 ist jeweils eine Buchse 121 angeordnet.

Bei dem dargestellten Ausführungsbeispiel ist die Länge der Buchsen 121 etwa 2 bis 3 Zehntel kürzer als der Bund der Bundschrauben und beträgt vorzugsweise etwa 4 Millimeter. Bei einer Dicke der Bremsscheibe von etwa 1,5 Millimetern ergibt sich daher ein möglicher Einstellweg von etwa 2,5 Millimetern, über den sich die Bremsscheibe beispielsweise bei zunehmenden Belagverschleiß auf den Buchsen bewegen kann. Entscheidend ist, daß der mögliche Verstellweg etwa dem möglichen Verschleiß der Bremsbeläge und somit der Verlagerung der Bremsscheibe entspricht bzw. etwas größer ist. Außerdem sollte der mögliche Verstellweg hinreichend groß sein, um durch das Spiel der Steckachse bedingte Bewegungen ausgleichen zu können.

Die Außendurchmesser der Buchsen 121 entsprechen vorteilhafterweise dem Innendurchmesser der Löcher im Innenbereich 141 der Bremsscheibe 140 derart, daß die Bremsscheibe in der Ausrückrichtung der Bremsbeläge bzw. in Axialrichtung beweglich ist.

Alternativ kann die Länge der Buchsen kürzer als die Länge des Bunds der Bundschrauben sein. In diesem Fall können die Buchsen in die Löcher im Innenbereich der Bremsscheibe eingepreßt sein, weil die axiale Verlagerbarkeit der Bremsscheibe gegenüber dem Mitnehmer durch die axiale Beweglichkeit der Buchsen auf dem jeweiligen Bund der Bundschrauben gewährleistet ist. Beispielsweise kann bei 4 Millimeter langen Buchsen die Länge des Bunds der Bundschrauben 6 bis 7 Millimeter betragen.

Vorteilhafterweise ist die Buchse aus Kunststoff ausgebildet, um störende Geräusche zu vermeiden, die entstehen könnten, wenn Metall gegen Metall schlägt oder schleift.

Die Aufnahme 150 weist einen Befestigungsflansch 151 auf, mit dem die Aufnahme 150 an einem nicht dargestellten Rahmenteil, beispielsweise einem Rohr zur Aufnahme einer Steckachse, befestigt werden kann. Desweiteren weist die Aufnamhe einen Befestigungsarm 152 auf, der auf bekannte Weise zur Drehsicherung mit einem Rahmenteil verbindbar ist. An seinem oberen Ende weist die Aufnahme 150 einen Bremssattel 153 auf, der auf bekannte Weise aufgebaut ist und im wesentlichen dem Bremssattel 53 des in den Figuren 1 bis 7 gezeigten Ausführungsbeispiels entspricht.

Die Erfindung ist nicht auf die dargestellten Ausführungsbeispiele beschränkt. Dem Fachmann bekannte und naheliegende Alternativen zu einzelnen Merkmalen sollen von dem Schutzumfang mit erfaßt sein.

## Patentansprüche

1. Bremssystem mit einer Nabe, die auf einer Steckachse zur lösbaren Befestigung an einem Rollstuhl, Kinderwagen, Anhänger oder Fahrzeug angeordnet ist,
einer Scheibenbremse, die eine Bremsscheibe (40, 140) umfasst, und
einem Mitnehmer (20, 120) zur drehfesten Aufnahme der Bremsscheibe (40, 140), der mit der Nabe drehfest verbindbar ist,
**dadurch gekennzeichnet, daß** die Bremsscheibe (40, 140) gegenüber der Nabe in Axialrichtung verschiebbar angeordnet ist.

2. Bremssytem nach Anspruch 1, **dadurch gekennzeichnet, daß** die Bremsscheibe (140) mit dem Mitnehmer (120) über Bundschrauben (122) drehfest verbunden ist, wobei die Bremsscheibe (140) im Bundbereich der Bundschrauben (122) axial verschiebbar angeordnet ist.

3. Bremssystem nach Anspruch 2, **dadurch gekennzeichnet, daß** im Bereich des Bunds der Bundschrauben (122) Buchsen (121), die vorzugsweise aus Kunststoff ausgebildet sind, vorgesehen sind, auf denen die Bremsscheibe (140) aufgenommen ist, wobei vorzugsweise die Buchsen (121) auf dem jeweiligen Bund der Bundschrauben (122) axial verschiebbar angeordnet sind und/oder die Bremsscheibe (140) auf den Buchsen (121) axial verschiebbar angeordnet ist.

4. Bremssystem (100) nach Anspruch 1, **dadurch gekennzeichnet, daß** der Mitnehmer (20) mit der Nabe über eine Kupplung drehfest verbindbar ist.

5. Bremssytem (100) nach einem der vorhergehenden Ansprüche, **dadurch gekennzeichnet, daß** der Mitnehmer (20) einen Scheibenaufnahmeteil (21) zur drehfesten Aufnahme der Bremsscheibe (40) und einen oder mehrere Kupplungsteile (23A, 23B, 23C, 23D) zur drehfesten Verbindung mit der Nabe (10) aufweist, der oder die in entsprechende Kupplungsteile (13A, 13B, 13C, 13D) der Nabe (10) eingreifen, wobei die Kupplungsteile (13A, 13B, 13C, 13D) der Nabe (10) mit den Kupplungsteilen (23A, 23B, 23C, 23D) des Mitnehmers vorzugsweise eine Klauenkupplung bilden.

6. Bremssytem (100) nach einem der vorhergehenden Ansprüche, **dadurch gekennzeichnet, daß** die Nabe (10) mit der Steckachse (30) fest verbunden oder einstückig ausgebildet ist.

7. Bremssytem (100) nach einem der vorhergehenden Ansprüche, **gekennzeichnet durch** eine Aufnahme (50), in der der Mitnehmer, vorzugsweise über eine Wälzlagerung mit zwei einreihigen Kugellagern (51A, 51B), gelagert ist.

8. Bremssytem (100) nach Anspruch 7, **dadurch gekennzeichnet, daß** die Aufnahme (50) einen Flansch (52) aufweist, an dem ein Bremssattel (53) angeordnet ist, wobei der Bremssattel vorzugsweise mit der Aufnahme (50) einstückig ausgebildet ist.

9. Bremssytem (100) nach einem der Ansprüche 7 bis 8, **dadurch gekennzeichnet, daß** die Aufnahme (50) an einem Rahmenteil (1), vorzugsweise mit Schrauben (2), befestigt ist.

10. Bremssytem (100) nach Anspruch 9, **dadurch gekennzeichnet, daß** die Bremsscheibe (40) derart angeordnet ist, daß sie auf der der Nabe (10) gegenüberliegenden Seite des Rahmenteils (1) liegt.

11. Bremssytem (100) nach einem der vorhergehenden Ansprüche, **gekennzeichnet durch** einen Bremssattel (53) mit zwei sich gegenüberliegenden Bremsbelagpaaren (41A, 41B), die vorzugsweise jeweils einen Festbelag (41B) aufweisen.

12. Bremssytem nach einem der vorhergehenden Ansprüche für einen Rollstuhl, das Hinterrad eines Rennrollstuhls, einen Kinderwagen oder einen Fahrradanhänger, der insbesondere eine Auflaufbremse aufweist.

13. Rollstuhl, Kinderwagen oder Fahrradanhänger mit mindestens einem Bremssystem nach einem der vorhergehenden Ansprüche.

14. Rollstuhl, Kinderwagen oder Fahrradanhänger mit zwei Bremssystemen nach einem der vorhergehenden Ansprüche, **gekennzeichnet durch** eine hydraulische Betätigungsvorrichtung, vorzugsweise mit einem Hebel, zur gemeinsamen Betätigung der beiden Bremssysteme.
